# EUROPÄISCHE PATENTSCHRIFT

(11) **EP 3 927 622 B1**
(45) Veröffentlichungstag und Bekanntmachung des Hinweises auf die Patenterteilung: **22.10.2025**
(21) Anmeldenummer: 20704415.7
(22) Anmeldetag: 28.01.2020
(51) Int. Cl.: B64F 1/32, B60L 9/00, B62D 57/024, B64F 1/36, B66F 9/06, B60L 53/30, B60L 50/53

(54) **FÖRDERSYSTEM MIT HÖHENGÄNGIGEN FAHRERLOSEN TRANSPORTFAHRZEUGEN**
CONVEYOR SYSTEM WITH DRIVERLESS TRANSPORT VEHICLES AT HEIGHT
SYSTÈME DE TRANSPORT POURVU DE VÉHICULES DE TRANSPORT SANS CONDUCTEUR SE DÉPLAÇANT VERS LE HAUT

(30) Priorität: 20.02.2019 EP 19158184
(43) Veröffentlichungstag der Anmeldung: 29.12.2021
(73) Patentinhaber: Siemens Logistics GmbH, 90429 Nürnberg (DE)
(72) Erfinder: ENENKEL, Peter, 78462 Konstanz (DE); ZISCH, Rainer, 78337 Öhningen (DE); VOGEL, Rainer, 78467 Konstanz (DE)
(74) Vertreter: Siemens Patent Attorneys
(86) Internationale Anmeldenummer: PCT/EP2020/051974
(87) Internationale Veröffentlichungsnummer: WO 2020/169307

(56) Entgegenhaltungen:
- WO-A1-2017/103937
- DE-A1- 102006 035 092
- DE-U1- 202007 014 834
- US-A1- 2016 167 557
- US-A1- 2017 136 931
- US-A1- 2018 141 752

## Beschreibung

Die vorliegende Erfindung betrifft das technische Gebiet der Fördersysteme für Stückgüter mit fahrerlosen Transportfahrzeugen, insbesondere Flughafen-Gepäcksortiersysteme.

Fahrerlose Transportfahrzeuge (FTF, Automated Guided Vehicles - AGV) gibt es heute in sehr vielen Ausführungen. Sie können sich in einer Ebene frei bewegen und dabei diverse Transport- und Sortieraufgaben erfüllen. Bekannte FTF bewegen sich heute ausschließlich in einer Ebene.

Der Anwendung von AGVs in heutigen Transportsystemen und den zugehörigen Technologien im CEP- und Airport-Bereich und eine Nachbildung dieser Systeme mit heutigen AGVs steht entgegen, dass für diese Systeme eine Höhengängigkeit, also das Anfahren unterschiedlicher Ebenen bei vollem Durchsatz, von zentraler Bedeutung ist. Verteil- und Sortieraufgaben finden auf unterschiedlichen Ebenen statt. Ein Höhengängigkeit von AGVs würde eine Übernahme von Verteil- und Sortieraufgaben auf unterschiedlichen Ebenen erlauben und somit ermöglichen:
- Abwurf in (Speicher-)Rutschen
- Nachbilden existierender Anlagenlayouts und Förderroutings, wie in der Steigfördertechnik (Hybrid, Retrofit)
- Layout Anpassung an bestehende Gebäude
- optimale und minimale Routenführung.

Höhenanpassungen in heutigen fahrerlosen Transportsystemen werden mittels Hubeinrichtungen direkt auf dem jeweiligen AGV realisiert (Hubwagen) oder durch die Nutzung externer Hub- und Lift-Vorrichtungen gelöst. Diese Lösungen gehen jedoch allesamt mit einer Durchsatzverringerung einher, sind konstruktiv aufwendig und relativ teuer. Zudem müssen diese Lösungen zu Beginn der Planung auf den maximalen Durchsatz ausgerichtet werden, damit sie nicht zu Engstellen werden. Dies torpediert jedoch den eigentlichen Vorteil von AGVbasierten Fördersystemen, dass modular auf Erweiterungen reagiert werden kann und die Größe des Fördersystems laufend anpassbar ist.

US 2016/0167557 A1 offenbart ein Transportfahrzeug mit Antriebsräder und einer Trägerplatte für ein Lastrega1, wobei die Trägerplatte durch Hubstangen derart angehoben werden kann, dass das Lastrega1 mehr in waagrechter Richtung angehoben wird. Ähnliche Transportfahrzeuge sind aus US 2017/136931 A1 und US 2018/141752 A1 bekannt. DE 20 2007 014834 U1 offenbart ein elektrisch angetriebenes Personentransportmittel mit Batterie/Akkumulator und Generator, wobei eine externe Stromschiene lediglich in einem Steigungsbereich das Personentransportmittel mit Strom versorgt. In WO 2017/103937 A1 wird ein Fahrzeug mit einem Förderband über ein Steigungsbereich entlang einer Strasse befördert.

Es gibt AGVs, die mit eigener Energieversorgung und eigenem Antrieb höhengängig sind. Diese AGVs können jedoch nur sehr geringe Steigungen, nicht mehr als etwa 2°, mit sehr geringer Geschwindigkeit und geringer Last überwinden. Zur Überwindung größerer Steigungen wäre ein leistungsstärkerer Antrieb notwendig, dessen Konstruktion und Energieversorgung jedoch aufwendig wäre.

Der vorliegenden Erfindung liegt daher die Aufgabe zugrunde, den Durchsatz in Fördersystemen auf vorteilhafte Art und Weise zu erhöhen. Diese Aufgabe wird durch die in den unabhängigen Ansprüchen beschriebenen Lösungen gelöst.

Die erfindungsgemäße Lösung sieht ein fahrerloses Transportfahrzeug (FTF, Automated Guided Vehicle AGV) vor, umfassend ein Lastaufnahmemittel zur Aufnahme eines Stückguts und ein Fahrwerk mit einem Antriebsmittel samt eigener Energieversorgung zum Bewegen auf einer Förderebene entlang einer individuellen Förderstrecke mit einer Durchsatzgeschwindigkeit. Das Fahrwerk weist eine Sekundärseite einer Energieübertragungsvorrichtung auf, die zur Energieaufnahme mit und/oder ohne Berührungskontakt während einer Bewegung auf einer einen Höhenunterschied überwindenden Steigstrecke und/oder auf einem Übergang auf die Steigstrecke ausgebildet ist, so dass der Höhenunterschied durch diese Energieaufnahme und/oder der Übergang mit der Durchsatzgeschwindigkeit überwindbar ist.

Das fahrerlose Transportfahrzeug ist zum Befahren der Steigstrecke in variabler Ausrichtung ausgestaltet. Das fahrerlose Transportfahrzeug ist zum Befahren der Steigstrecke bei variabler Längsausrichtung des Fahrwerks mit fester Längsausrichtung des Lastaufnahmemittels ausgestaltet, oder bei variabler Querausrichtung des Fahrwerks mit variabler Längsausrichtung des Lastaufnahmemittels ausgestaltet.

Unter einer Sekundärseite im Sinne der Erfindung soll jegliche Vorrichtung verstanden werden, die zur Energieaufnahme von einer Primärseite der Energieübertragungsvorrichtung ausgestaltet ist. Die Energieübertragungsvorrichtung wird ausgebildet durch die Primär- und Sekundärseite. Unter einer variablen Ausrichtung soll sowohl eine einzige, aber wahlfreie und in diesem Sinne variable, fest eingestellte Ausrichtung des Transportfahrzeugs während des Befahrens der Steigstrecke, als auch eine Veränderung der Ausrichtung (entweder des gesamten Transportfahrzeugs oder des Fahrwerks und/oder Lastaufnahmemittels) während des Befahrens der Steigstrecke verstanden werden. Sowohl zum Überwinden des Höhenunterschieds der Steigstrecke mit der Durchsatzgeschwindigkeit, als auch zum Überwinden des Übergangs mit der Durchsatzgeschwindigkeit kann die aufgenommene Energie herangezogen werden. Das fahrerlose Transportfahrzeug ist ausgestaltet, das Ausbilden der Energieübertragungsvorrichtung, also eine Kupplung der Primärseite mit der Sekundärseite, während einer Bewegung mit der Durchsatzgeschwindigkeit durchzuführen.

Die eigene Energieversorgung kann beispielsweise als Batterie, aufladbar oder austauschbar, aber auch als Treibstofftank o.ä. ausgestaltet sein. Die Durchsatzgeschwindigkeit des fahrerlosen Transportfahrzeugs bestimmt als Maximalgeschwindigkeit des fahrerlosen Transportfahrzeugs auf der im Wesentlichen horizontalen Förderebene den Durchsatz des Gesamtsystems. Das fahrerlose Transportfahrzeug kann sich aber auch langsamer auf der Förderebene bewegen. Die Durchsatzgeschwindigkeit der AGV kann 2 m/s und mehr betragen.

Die Sekundärseite kann zusätzlich zu der eigenen Energieversorgung des Antriebsmittels vorhanden oder von dieser umfasst sein. Die Energieaufnahme durch die Sekundärseite ist eine Energieausspeisung. Die Energieübertragung kann über Berührungskontakt (elektrisch, beispielsweise Omnibus-oberleitungsartig, mechanisch, magnetisch, elektromagnetisch, ...) oder ohne Berührungskontakt (induktiv, magnetisch, elektromagnetisch ...) oder kombiniert erfolgen.

Das fahrerlose Transportfahrzeug ist ausgestaltet, die Steigstrecke bergauf und bergab zu überwinden. Die Förderebene und die Steigstrecke bilden einen konvexen (bergab) oder konkaven (bergauf) Übergang. Der Steigwinkel ist abhängig von der Geometrie und Auslegung des Fördersystems und liegt zwischen 0 und 90°, für normales Befahren nicht mehr als 45°. Das fahrerlose Transportfahrzeug ist mit seiner Geometrie derart an den Übergang angepasst dimensioniert, dass es den Übergang (konvex oder konkav) fahrend ohne wesentliche Verlangsamung seiner Geschwindigkeit, also mit im Wesentlichen stetiger Durchsatzgeschwindigkeit, überwinden kann. Die Sekundärseite ist während einer Bewegung mit der normalen Durchsatzgeschwindigkeit derart mit einer Primärseite der Energieübertragungsvorrichtung verbindbar/kuppelbar, dass dieser Verbindungsaufbau nicht zu einer Verlangsamung der Durchsatzgeschwindigkeit führt. Das fahrerlose Transportfahrzeug muss also weder seine Fahrt verlangsamen, noch anhalten, um derart mit der Primärseite verbunden zu werden, dass es die Energie aufnehmen kann.

Damit auch bei großen Steigwinkeln und/oder hohen Durchsatzgeschwindigkeiten ein Stückgut sicher auf dem Lastaufnahmemittel transportiert werden kann, kann das fahrerlose Transportfahrzeug in der Ausgestaltung mit variabler Querausrichtung des Fahrwerks und variabler Längsausrichtung des Lastaufnahmemittels zudem mindestens eine Ausrichtungsvorrichtung umfassen, mittels welcher das Lastaufnahmemittel um mindestens eine horizontale Achse schwenkbar gelagert ist, so dass das Lastaufnahmemittel sowohl auf der Förderebene, als auch auf der Steigstrecke aktiv und/oder passiv horizontal ausrichtbar ist. So ist eine Auflagefläche des Lastaufnahmemittels stets horizontal ausgerichtet und das Transportverhalten des fahrerlosen Transportfahrzeugs wird verbessert. Eine seitliche Begrenzung des Lastaufnahmemittels ist so auch auf der Steigstrecke nicht unbedingt erforderlich. Das Lastaufnahmemittel kann auf der Steigstrecke und auf der Förderebene aktiv (kippbar durch eine Vorrichtung) und/oder passiv (pendelnd, hängend schwenkbar gelagert) horizontal ausrichtbar sein. Bei Veränderung der Ausrichtung während des Bewegens kann ein Horizontalhalten des Lastaufnahmemittels vorteilhafterweise auch mittels mehrerer Schwenkachsen erzielt werden, beispielsweise über eine (schiffskompassartige) kardanische Lagerung.

Gemäß einer Ausführungsform kann das fahrerlose Transportfahrzeug zudem eine Entladevorrichtung umfassen, wobei die Ausrichtungsvorrichtung von der Entladevorrichtung umfasst sein kann. Dies verringert Redundanz und erlaubt einen Retrofit bereits existierender Entladevorrichtungen aufweisender fahrerloser Transportfahrzeuge.

Gemäß einer weiteren Ausführungsform kann das fahrerlose Transportmittel zum Befahren der Steigstrecke bei variabler Ausrichtung des Fahrwerks mit fester Ausrichtung des Lastaufnahmemittels ausgestaltet sein. Diese voneinander unabhängige Ausrichtungsmöglichkeit des Fahrwerks und des Lastaufnahmemittels ermöglicht eine optimierte Abstimmung zwischen der Ausrichtungsmöglichkeit des Fahrwerks und der Ausrichtungsvorrichtung selber.

Um ein Stückgut gut zu transportieren, zu be- und entladen und abzusichern, kann das Lastaufnahmemittel als Transportwanne und/oder Crossbelt und/oder Auflagefläche mit oder ohne teilweise oder vollständige seitliche Begrenzung ausgestaltet sein.

Gemäß einer weiteren Ausführungsform kann die Sekundärseite derart mit der Primärseite mechanisch verbindbar ausgestaltet sein, dass die Primärseite als Antriebsmittel zur Überwindung des Höhenunterschieds agiert. Die Sekundärseite weist hierfür eine mechanische Kupplungsvorrichtung auf, die mit der Primärseite kuppelbar und zur Ausbildung eines formschlüssigen Eingriffs mit der Primärseite ausgestaltet ist.

Gemäß einer weiteren Ausführungsform kann das Antriebsmittel des Fahrwerks ausgestaltet sein, derart von der Sekundärseite berührungslos mit Energie versorgt zu werden, dass der Höhenunterschied mit dem Antriebsmittel des Fahrwerks überwindbar ist. Die Sekundärseite liefert so zusätzlich zur eigenen Energieversorgung dem eigenen Antriebsmittel des fahrerlosen Transportfahrzeugs Energie, ohne dass ein zusätzliches Antriebsmittel erforderlich ist.

Gemäß einer weiteren Ausführungsform kann das fahrerlose Transportfahrzeug zudem eine Orientierungsvorrichtung zur Navigation, beispielsweise anhand optischer und/oder spur- und/oder liniengeführter Orientierung, des fahrerlosen Transportfahrzeugs umfassen. Die Art der Navigation kann zwischen der Förderebene und der Steigstrecke wechseln und die Orientierungsvorrichtung ist für beide Arten der Navigation ausgestaltet.

Die erfindungsgemäße Lösung sieht zudem ein Fördersystem zum Transportieren von Stückgütern auf einer Förderebene vor. Das Fördersystem umfasst ein fahrerloses Transportfahrzeug gemäß einer der oben beschriebenen Ausführungsformen, welches auf einer Förderebene entlang einer individuellen Förderstrecke mit einer Durchsatzgeschwindigkeit bewegbar ist. Das Fördersystem umfasst eine an die Förderebene anschließende, einen Höhenunterschied überwindenden Steigstrecke. Das Fördersystem umfasst ebenfalls eine steigstreckenseitige Primärseite einer Energieübertragungsvorrichtung, die bei variabler Ausrichtung und während einer Bewegung des fahrerlosen Transportfahrzeugs auf der Steigstrecke und/oder auf einem Übergang auf die Steigstrecke ausgebildet ist zur Energieeinspeisung mit und/oder ohne Berührungskontakt, so dass der Höhenunterschied und/oder der Übergang für das fahrerlose Transportfahrzeug durch diese Energieeinspeisung mit der Durchsatzgeschwindigkeit überwindbar ist. Die Primärseite ist ausgestaltet zur Energieeinspeisung bei variabler längs oder quer Ausrichtung des Fahrwerks des förderlosen Transportfahrzeugs der Steigstrecke.

Die Primärseite als Steigstreckenförderhilfe ist auf und/oder an und/oder entlang und/oder in bzw. unterhalb und/oder oberhalb der Steigstrecke angeordnet. Die Art der Energieeinspeisung der Primärseite ist an die Art der Energieausspeisung der Sekundärseite angepasst. Das Fördersystem ist so ausgestaltet, dass das fahrerlose Transportfahrzeug prinzipiell sowohl während der Energieeinspeisung, während der Herstellung der Kopplung bzw. des Verbindungsaufbaus der Energieübertragungsvorrichtung, beim Überwinden des Übergangs und auf der Steigstrecke stets mit der Durchgangsgeschwindigkeit bewegbar ist. Eine langsamere Transportgeschwindigkeit ist selbstverständlich auch möglich.

Gemäß einer Ausführungsform kann die Primärseite ausgestaltet sein zur Energieeinspeisung bei variabler längs oder quer Ausrichtung des Fahrwerks des förderlosen Transportfahrzeugs der Steigstrecke. Da die Steigstrecke eine gerade, gekrümmte oder wendelförmige Fahrspur für die fahrerlosen Transportfahrzeuge aufweisen kann, kann so eine konstante Ausrichtung des Lastaufnahmemittels erzielt werden.

Gemäß einer weiteren Ausführungsform kann die Primärseite mechanisch mit der Sekundärseite verbindbar und so als Antriebsmittel zur Überwindung des Höhenunterschieds ausgestaltet sein. Dies ermöglicht die Überwindung des Höhenunterschieds und/oder der Steigstrecke mit der Durchsatzgeschwindigkeit, ohne dass das eigene Antriebsmittel des fahrerlosen Transportmittels für diese zusätzliche Belastung ausgelegt werden muss.

Gemäß einer weiteren Ausführungsform können die Primärseite und die Sekundärseite zur Ausbildung und Trennung einer formschlüssigen Verbindung während einer Bewegung des fahrerlosen Transportfahrzeugs mit Durchsatzgeschwindigkeit ausgestaltet sind. So kann auf einfache Art und Weise das Transportfahrzeug in seiner Bewegung geführt bzw. unterstützt werden.

Gemäß einer weiteren Ausführungsform kann das Fördersystem eine Orientierungsvorrichtung zur Navigation der Bewegung des fahrerlosen Transportfahrzeugs mittels einer ersten Art auf der Förderebene, beispielsweise einer optischen Führung, und/oder mittels einer zweiten Art auf der Steigstrecke, beispielsweise einer spur- und/oder liniengeführten Führung umfassen. So kann die Navigation effizient angepasst auf die erforderliche Genauigkeit durchgeführt werden.

Hinsichtlich eines Verfahrens wird die vorstehend genannte Aufgabe gelöst durch ein Verfahren zum Transportieren von Stückgütern mit einem fahrerlosen Transportfahrzeug, umfassend ein Fahrwerk und ein Lastaufnahmemittel. Das Verfahren umfasst die Verfahrensschritte:
a) Bewegen des fahrerlosen Transportfahrzeugs auf einer Förderebene entlang einer individuellen Förderstrecke mit einer Durchsatzgeschwindigkeit hin zu einer einen Höhenunterschied überwindenden Steigstrecke wobei das fahrerlose Transportfahrzeug die Steigstrecke bei variabler Längsausrichtung des Fahrwerks mit fester Längsausrichtung des Lastaufnahmemittels befährt, oder bei variabler Querausrichtung des Fahrwerks mit
b) Ausbilden einer Energieübertragungsvorrichtung aus einer steigstreckenseitigen Primärseite zur Energieeinspeisung und einer fahrwerkseitigen Sekundärseite zur Energieaufnahme mit und/oder ohne Berührungskontakt während einer Bewegung des fahrerlosen Transportfahrzeug mit der Durchsatzgeschwindigkeit auf der Steigstrecke und/oder einem Übergang zwischen der Förderebene und der Steigstrecke.
c) Überwinden des Übergangs und des Höhenunterschieds auf der Steigstrecke mit der Durchsatzgeschwindigkeit durch diese Energieaufnahme durch das fahrerlose Transportfahrzeug mit der Durchsatzgeschwindigkeit.
d) Lösen der Energieübertragungsvorrichtung.

Die Energieübertragungsvorrichtung kann auf vielfältige Art und Weise realisiert werden. Die Reihenfolge der Verfahrensschritte kann situativ angepasst werden. So ist es auch möglich, dass die Sekundärseite schon vor dem Übergang oder am Anfang der Steigstrecke die gesamte erforderliche zusätzliche Energie liefert, so dass das Lösen der Energieübertragungsvorrichtung nicht nach dem Überwinden des Übergangs oder der gesamten Steigstrecke am Ende der Steigstrecke erfolgt.

Gemäß einer weiteren Ausführungsform kann ein Führen des fahrerlosen Transportfahrzeugs auf der Förderebene mit einer ersten Art einer Orientierungsvorrichtung erfolgen. Es kann ein Wechsel einer Führungsart der Orientierungsvorrichtung von einer ersten Art hin zu einer zweiten Art während einer Bewegung des fahrerlosen Transportfahrzeugs mit der Durchsatzgeschwindigkeit erfolgen. Und es kann ein Führen des fahrerlosen Transportfahrzeugs auf der Steigstrecke mit der zweiten Art der Orientierungsvorrichtung erfolgen. Der Wechsel der Führungsart der Orientierungsvorrichtung kann vor, während oder nach einem Überwinden des Übergangs oder beim Herstellen der Energieübertragungsvorrichtung erfolgen, ein kurzer Überlapp ist hierbei möglich.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Ausführungsformen der Erfindung werden nachfolgend anhand der Figuren beispielsweise näher erläutert. Dabei zeigen:
Figur 1 ein Fördersystem in seitlicher Ansicht und in Aufsicht, wobei die Darstellung in der Fig. 1b nicht erfindungsgemäss ist;
Figuren 2a - 2g das Befahren der Förderebenen und der Steigstrecke durch ein fahrerloses Transportfahrzeug gemäß einer Ausführungsform;
Figuren 3 - 8 unterschiedliche Ausführungsformen der Energieübertragungsvorrichtung samt Antriebsmöglichkeiten, wobei das Transportfahrzeug nicht erfindungsgemäss ist.

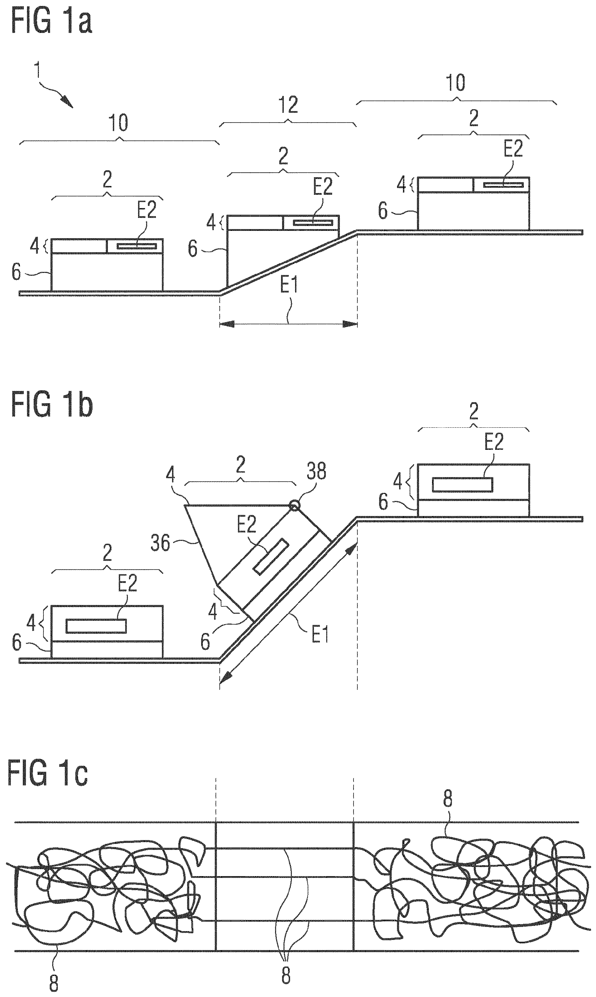

Figur 1 zeigt in seitlicher Ansicht (a, b) und in Aufsicht (c) schematisch Fördersysteme 1. Ein fahrerloses Transportfahrzeug (FTF) 2 welches ein Fahrwerk 6 und ein Lastaufnahmemittel 4 aufweist ist auf einer oberen und unteren Förderebene 10 und auf einer Steigstrecke 12 angeordnet. Das Lastaufnahmemittel 4 weist eine Ausrichtungsvorrichtung 36 auf, mittels welcher die Auflagefläche des Lastaufnahmemittels 4 auch bei geneigtem Untergrund wie auf der Steigstrecke 12 stets horizontal anordenbar ist, so dass ein auf dieser Auflagefläche aufliegendes Stückgut 14 nicht ins Rutschen gerät. Die Ausrichtungsvorrichtung 36 von Figur 1b greift aktiv an einem Rand des Lastaufnahmemittels 4, welches um eine am gegenüberliegenden Rand angeordnet horizontale Achse 38 gelagert ist, an. Diese Ausrichtungsvorrichtung 36 ist zweiachsig ausgestaltet. Die beiden Achsen 38 können wie in Figur 1b parallel zueinander angeordnet sein, müssen dies aber nicht, beispielsweise bei einer schiffskompassartig ausgestalteten Ausrichtungsvorrichtung 36. Figur 1a) zeigt eine mittige Anordnung der Achse 38 mit einachsiger Aufhängung, die sowohl eine aktive, als auch eine passive Ausgestaltung der Ausrichtungsvorrichtung 36 erlaubt. Eine einachsige Ausrichtungsvorrichtung 36 kann segwayartig als pendelndes, instabiles System oder als einfache, in der Art eines Eimers eingehängte Wanne, die das Lastaufnahmemittel 4 bei entsprechender Ausrichtung auf der Steigstrecke 12 pendelnd selber ausrichtet, realisiert werden.

Ein FTF 2 ohne Ausrichtungsvorrichtung 36 ist auch realisierbar, hierfür ist ab einer gewissen Steigung eine seitliche Begrenzung des Lastaufnahmemittels 4 erforderlich, damit ein auf dem Lastaufnahmemittel 4 aufliegendes Stückgut auf der Steigstrecke nicht herabrutscht.

Aufgrund der Sortiergeometrie weisen Behälter des Lastaufnahmemittels 4 typischerweise eine seitliche Begrenzung (Rand) auf ihrer Querseite und keine seitliche Begrenzung entlang ihrer Längsseite auf, da über die Längsseite typischerweise die Entladung erfolgt. Eine seitliche Begrenzung ist bei entsprechender Entladeart ebenfalls möglich. Das FTF 2 ist ausgestaltet, die Steigstrecke 12 längs und/oder quer zu überwinden.

Gemäß einer Ausführungsform wird eine zum Abladen verwendbare Tiltbeweglichkeit des FTFs 2, die als Entladevorrichtung agiert, als Ausrichtungsvorrichtung 36 herangezogen.

Das Fahrwerk 2 ist derart angepasst an einen Übergang zwischen der Förderebene 10 und die Steigstrecke 12 angepasst dimensioniert, dass der Übergang überwindbar ist. Dies ist beispielsweise realisierbar, indem mit großen Transportrollen eine hohe Bodenfreiheit erzielt wird, eine transportraupenartige Ausgestaltung des Fahrwerks 6, aber auch durch eine Anpassung des Übergangs (sanft ansteigender Übergang, o.ä.).

Das Fördersystem 1 weist eine steigstreckenseitige Primärseite E1 und eine transportfahrzeugseitige Sekundärseite E2 auf. Die Primärseite E1 und die Sekundärseite E2 bilden eine Energieübertragungsvorrichtung E aus, wobei die Primärseite E1 zur Energieeinspeisung und die Sekundärseite E2 zur Energieausspeisung bzw. -entnahme ausgestaltet ist. Die Energie kann auf vielfältige Art übertragen werden: mit und/oder ohne Berührungskontakt, induktiv elektrisch oder über direkten elektrisch leitenden Kontakt, magnetisch und/oder mechanisch. Eine mechanische Energieübertragung erfolgt durch Ausbildung einer form- und/oder reibschlüssigen Verbindung zwischen der Primärseite E1 und der Sekundärseite E2, so dass Primärseite E1 und Sekundärseite E2 mechanisch kuppelbar sind. Die Primärseite E1 und die Sekundärseite E2 können auch zugleich für unterschiedliche Energieübertragungsarten ausgelegt sein (beispielsweise elektrische Oberleitung, unterstützt durch ein Umlaufband, in welche sich das FTF 2 einklinken kann). Die Primärseite E1 kann auf und/oder an und/oder entlang und/oder in und/oder oberhalb der Steigstrecke 12 und/oder dem Übergang angeordnet sein und agiert als Steigstreckenförderhilfe.

Die Kupplung der Primär- und Sekundärseite E1, E2 zur Ausbildung der Energieübertragungsvorrichtung E erfolgt während einer Bewegung des FTFs 2 mit im Wesentlichen der Durchsatzgeschwindigkeit der FTFs 2, um den Durchsatz nicht zu verringern. Der Durchsatz der FTF 2 auf der Förderebene 10 entspricht dem Durchsatz auf der Steigstrecke 12 und auf dem Übergang. Auf der Förderebene 10 selber kann sich das FTF 2 mit seiner eigenen Energieversorgung fortbewegen. Die zusätzliche, von der Primärseite gelieferte Energie kann auf der Steigstrecke 12 und/oder dem Übergang die eigene Energieversorgung unterstützen oder vollständig redundant machen.

Die Energieübertragung kann entlang der gesamten Steigstrecke 12 erfolgen, oder aber im Bereich des Übergangs kann die gesamte Energiemenge auf einmal übertragen werden. Die Durchsatzgeschwindigkeit ist die normale, maximal mögliche Geschwindigkeit der FTFs 2 auf der Förderebene 10. Auf der Förderebene 10 ist das FTF 2 frei bewegbar, seine Förderstrecke 8 individuell festlegbar. Auf der Steigstrecke 12 legt das FTF 2 einen durch die Primärseite E1 bestimmten Weg 8 zurück. Mehrere FTFs 2 bilden auf der Steigstrecke 12 einen Transportfahrzeugkonvoi aus, auf den Förderebenen 10 kann das FTF 2 frei fahren und jederzeit aus dem Transportfahrzeugkonvoi ausbrechen.

Das FTF 2 kann, mit der von der Primärseite E1 gelieferten Energie, welches es mit seiner Sekundärseite E1 entnimmt, frei fahrend mit eigenem Antrieb den Übergang und/oder die Steigstrecke 12 überwinden. Gemäß einer Ausführungsform erfolgt die Energieversorgung im Bereich der Steigstrecke 12 durch eine stromführende Leitung oder Schiene in der Art eines Elektrobus.

Alternativ existiert ein steigstreckenseitiger Antrieb, welcher das FTF 2 komplett transportiert oder den eigenen Antrieb des FTFs 2 unterstützt.

Zunächst bewegt sich das FTF 2 auf der Förderebene 10 mit der Durchsatzgeschwindigkeit hin zum Übergang und der Steigstrecke 12. Die steigstreckenseitige Primärseite E1 und die Sekundärseite E2 des FTF 2 bilden während einer Bewegung des FTF 2 mit der Durchsatzgeschwindigkeit eine Energieübertragungsvorrichtung E aus. Die Primärseite E1 liefert der Sekundärseite E2 Energie - kurz und impulsartig oder aber über die gesamte Länge der Steigstrecke 12. Anschließend erfolgt ein Lösen der Energieübertragungsvorrichtung.

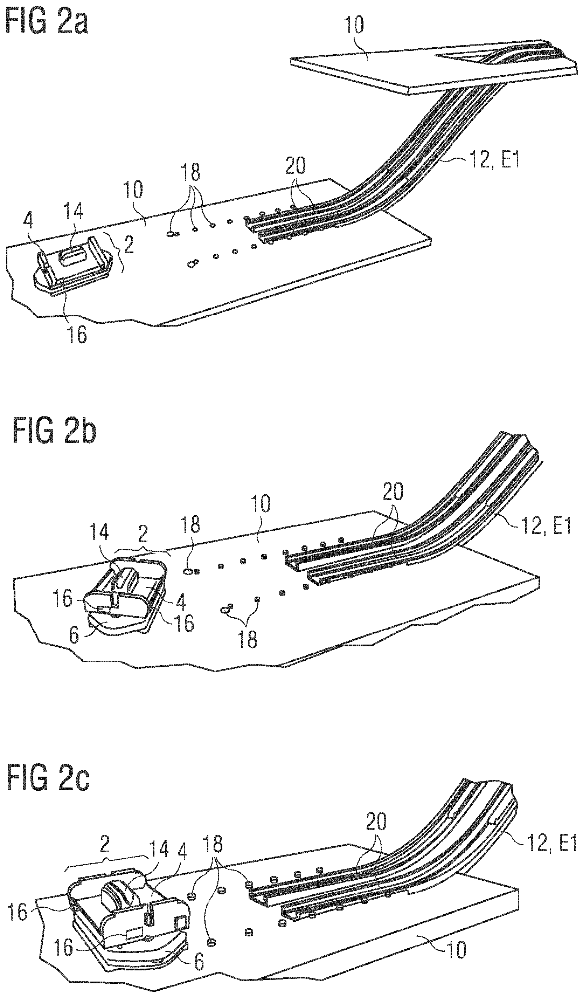

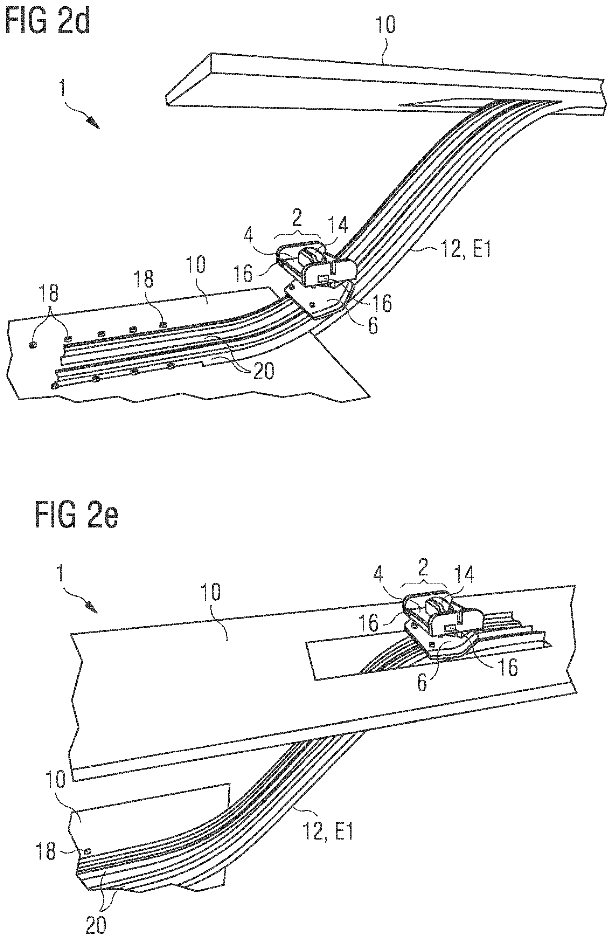

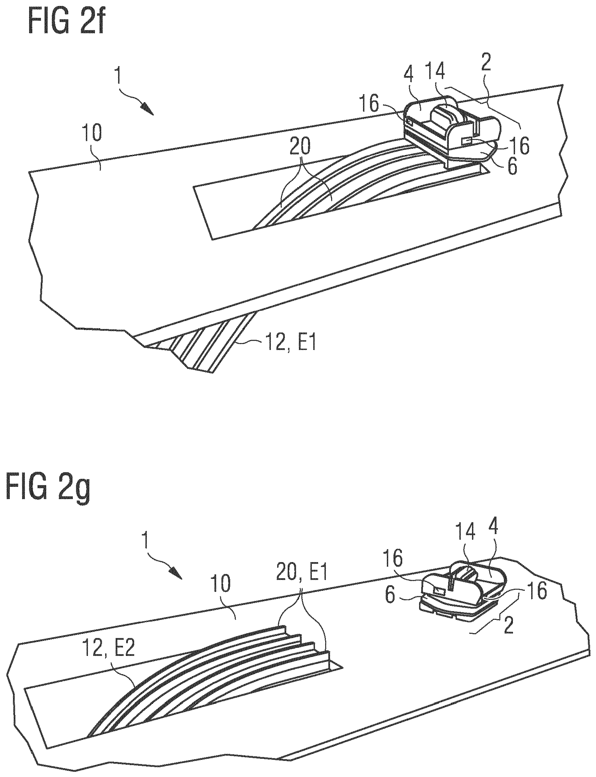

Die Figuren 2a - 2g zeigen ein erfindungsgemäßes Verfahren zum Transportieren eines Stückguts 14 mit einem FTF von einer unteren Förderebene 10 über eine Steigstrecke 12 hin zu einer oberen Förderebene 10. Auf der unteren Förderebene 10 bewegt sich das FTF 2 mit variabler, sich verändernder Ausrichtung. Während sich das FTF 2 der Steigstrecke 12 nähert, richtet es sich quer aus (Figur 2a - 2c). Es wäre auch möglich, dass das FTF 2 mit anderer Ausrichtung die Steigstrecke 12 befährt und das Lastaufnahmemittel 4 ebenfalls derart ausgerichtet wird, dass es durch die Ausrichtungsvorrichtung 34 horizontal ausrichtbar ist. Auch eine andere Absicherung (seitliche Begrenzung, festschnallen, ...) des Stückguts 14 auf dem Lastaufnahmemittels 4 und keine horizontale Ausrichtung des Lastaufnahmemittels 4 ist möglich. Mit Unterstützung einer Führungshilfe 18 und seiner Orientierungsvorrichtung 16 lässt sich das FTF 2 hin zu einer Führungsschiene 20 führen und auf diese hinauffahren. Die Führungshilfe 18 ermöglicht die grobe Positionierung und Orientierung des FTF 2, damit das Einfädeln auf die Führungsschiene 20 bei voller Durchsatzgeschwindigkeit erfolgen kann und nicht direkt vor der Führungsschiene 20 ein Verlangsamen zur Ausrichtung erfolgen muss.

Die Orientierungsvorrichtung 16 erlaubt den Wechsel zwischen verschiedenen Techniken zur Spurführung der Förderstrecke 8, zur Orientierung und Navigation der FTF 2. So ist es für das FTF 2 möglich, eine physische und/oder eine virtuelle Leitlinie zu verfolgen und mit anderen Navigationsverfahren zu kombinieren. Auf der Förderebene 10 kann so beispielsweise ein optisches System verwendet werden, welches im Bereich des Übergangs und auf der Steigstrecke 12 von einem spurgeführten System abgelöst wird. Auf der Förderebene 10 ist eine geringere Genauigkeit bei der Ortsbestimmung unproblematisch. Um eine Verbindung der Primärseite E1 und der Sekundärseite E2 bei voller Durchsatzgeschwindigkeit zu ermöglichen, ist eine höhere Genauigkeit notwendig. Die Führungshilfe 18 unterstützt den Wechsel von einer weniger genauen hin zu einer genaueren Spurführung.

Die Führungsschiene 20 beginnt bei dieser Ausführungsform bereits auf der unteren Förderebene 10 und erstreckt sich auch über einen Teil der oberen Förderebene 10. Die Ausbildung der Energieübertragungsvorrichtung E erfolgt auf der Führungsschiene 20. Der Übergang zwischen der Förderebene 10 und der Steigstrecke 12 umfasst hier auch den Bereich der Führungshilfe 18 und Führungsschiene 20 auf der unteren Förderebene 10.

Das Lastaufnahmemittel 4 weist auf der Vorder- und Rückseite eine seitliche Begrenzung auf, so dass das Stückgut 14 gegen durch Geschwindigkeitsänderungen verursachtes Rutschen und Herabfallen in Längsrichtung gut abgesichert ist, ohne dass ein seitliches Be- und Entladen behindert ist. Während das FTF 2 auf der Förderebene 10 selber meist längs ausgerichtet fährt (Figur 2a), überwindet es die Steigstrecke 12 mit quer ausgerichtetem Fahrwerk 6 (Figuren 2d-e). Damit das Stückgut 14 auf der Steigstrecke 12 nicht seitlich herabfällt, wird das Lastaufnahmemittel 4 auf der Steigstrecke 12 von einer von dem FTF 2 umfassten Ausrichtungsvorrichtung 36 fortwährend derart ausgerichtet, dass das Lastaufnahmemittel 4 stets horizontal ausgerichtet ist (Figuren 2c-f). Nachdem das FTF 2 die Führungsschiene 20 verlassen hat, kann es sich wieder drehen (Figur 2g). Ein weiteres Bewegen des quer oder komplett variabel ausgerichteten FTFs 2 ist ebenfalls möglich.

Eine andere Ausgestaltung mit einem sich während des Befahrens der Steigstrecke 12 drehenden FTF 2, oder eine Überwindung der Steigstrecke 12 mit längs oder andersartig variabel ausgerichtetem FTF 2 und hieran adaptierter Ausrichtungsvorrichtung 26 ist ebenfalls möglich. Um eine variable Ausrichtung des FTF 2 zu ermöglichen, ist der Radausschlag nicht beschränkt.

Das FTF 2 ist gemäß einer Ausführungsform ausgestaltet zur Überwindung des Übergangs und der Steigstrecke 12 mit eigenem Antrieb. Das Fördersystem 1 ist mit oder ohne Führungsschienen 20 realisierbar. Bei einer Ausgestaltung mit Führungsschienen 20 kann das FTF 2 selbstständig auf diese auffahren. Das FTF 2 kann selbstständig, mit eigenem Antrieb, eine schräge oder wendelförmige Fahrspur hinauffahren. Dazu fährt die FTF 2 mit Durchsatzgeschwindigkeit und annähernd konstant bleibender Lücke zwischen den weiteren FTF 2 selbstständig oder kraftunterstützt durch ein externes Zugmittel eine gerade, gekrümmte oder wendelförmige Fahrspur hinauf bzw. hinunter. Bei allen Ausführungsformen kann das FTF 2 bei einem Stopp wieder anfahren. Das Zurückrollen nach einem Stopp wird durch eine Bremse verhindert.

Um größere Steigungen überwinden zu können, nimmt das FTF 2 mit seiner Sekundärseite E2 von der steigstreckenseitige Primärseite E1 Energie auf und verstärkt mit dieser zusätzlichen Energie seinen eigenen Antrieb.

Die Energie kann elektrisch berührungslos (induktiv) oder überleitenden elektrischen Kontakt (Stromschiene, Oberleitung, ...) übertragen werden. Mit Unterstützung durch die Primärseite E1 als externe Energieversorgung fährt das FTF 2 mit eigenem Antrieb die Steigstrecke 12 hinauf. Bei einem Stopp kann das FTF 2 wieder anfahren. Das Zurückrollen nach einem Stopp, wird durch eine Bremse verhindert.

Es ist auch möglich, auf der Steigstrecke 12 einen ersten Magneten entlang der Förderrichtung zu bewegen und das FTF 2 mit einem zweiten, diesem ersten Magneten bergauf oder bergab folgenden Magneten auszurüsten und das FTF 2 so zu unterstützen.

Bei einer weiteren Ausführungsform einer schienengebundenen Ausgestaltung, allerdings mit Formschluss, fährt das FTF 2 selbstständig auf ein Schienensystem 20 auf und bringt dabei ein mit seinem Antrieb gekoppeltes Zahnrad an einer feststehenden Zahnschiene im Steigungsbereich oder bereits im Bereich des Übergangs in Eingriff.

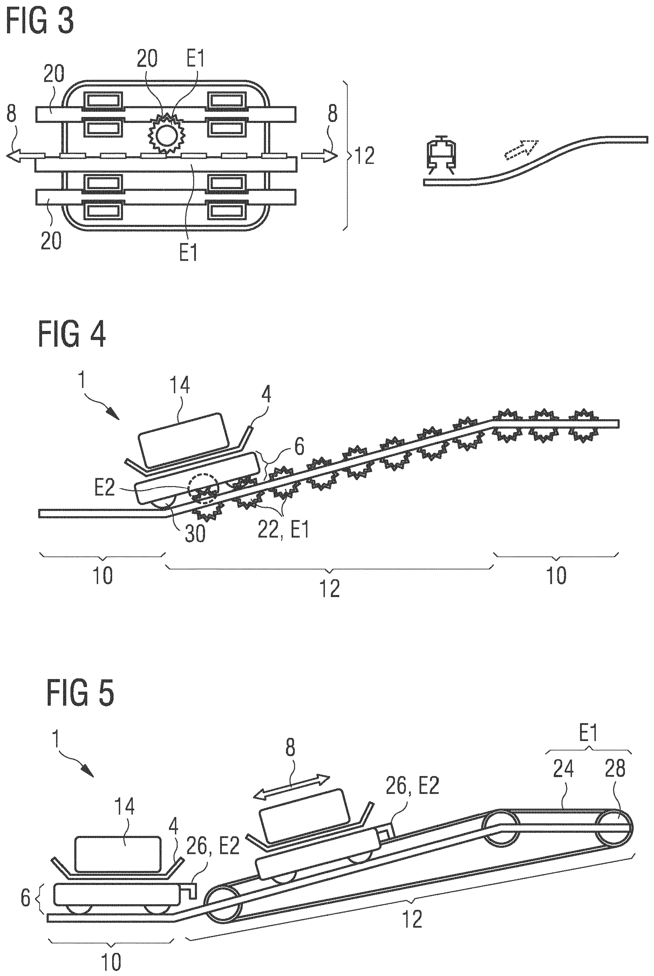

In der Figur 3 ist das FTF 2 auf der Steigstrecke 12 schienengebunden und erhält Energiezufuhr von außen (von der Primärseite E1). In Aufsicht ist eine steigstreckenseitige Führungsschiene 20, mit mittig angeordnetem Zahnrad welches als Primärseite E1 agiert und angetrieben wird. Die transportfahrzeugseitige Sekundärseite E2 muss über einen entsprechenden Eingriff verfügen. Die benötigte Energie wird durch eine Stromschiene und/oder berührungslos bereitgestellt.

Das FTF 2 fährt hierbei selbstständig auf das Schienensystem 20 auf, und bringt dabei ein mit dem Antrieb gekoppeltes Zahnrad an einer feststehenden Zahnschiene im Steigungsbereich in Eingriff. Bei einem Stopp kann das FTF 2 wieder anfahren. Das Zurückrollen nach einem Stopp, wird durch eine Bremse verhindert.

Diese Art des Antriebs ist von Zahnradbahnen bekannt. Nachdem ein Auffahren auf die Führungsschiene 20 erfolgt ist, kann der Eingriff bei voller Fahrt erfolgen. Die Zahnräder E1 agieren als externe Antriebsmittel. Das Lastaufnahmemittel 4 ist mit seitlicher Begrenzung aufgeführt und verfügt in dieser Ausführungsform nicht über ein Ausrichtungsmittel 36. Ein Ausrichtungsmittel 36 wäre jedoch problemlos integrierbar.

Das FTF 2 kann sich bei allen Ausführungsformen sowohl bergauf, als auch bergab entlang der Steigstrecke 12 bewegen. Bei einer Bewegung bergab leistet die Primärseite E1 Bremskraft, um das FTF 2 kontrolliert bergab zu transportieren.

Figur 4 zeigt ein in Führungsschienen 20 geführtes, durch als Zahnräder 22 ausgestaltete einzelne Antriebselemente angetriebenes FTF 2. Ebenfalls möglich sind Bandsegmente, Kettensegmente o.ä.. Die Steigstrecke 12 weist Führungsschienen 20 auf, die Antriebselemente sind entlang den Führungsschienen 20 angeordnet. Die FTF 2 fädeln sich wie oben beschrieben in die Führungsschienen 20, werden durch diese geführt und durch die Antriebselemente auf der Steigstrecke 12 angetrieben.

Ebenfalls möglich und im Folgenden dargestellt sind Fördersysteme 1 mit externem Fördermittel mit oder ohne Unterstützung durch den eigenen Antrieb des FTFs 2. Der eigene Antrieb ist mindestens zur Fortbewegung auf der Förderebene 10 ausgestaltet mit der eigenen Energieversorgung (Batterie, ...) des FTFs 2.

Figur 5 zeigt ein mit Antriebsmitteln 28 angetriebenes, als Primärseite E1 agierendes Zugmittel, hier als Umlaufband 24 ausgestaltet, welches das FTF 2 ohne Führungselemente schleppt. Das FTF 2 weist eine Einhakvorrichtung 26 zur Ausbildung einer formschlüssigen Verbindung mit dem Umlaufband 24 auf. Die FTFs 2 können sich mit dieser Einhakvorrichtung 26 in das Zugmittel einklinken und so nach oben gezogen werden. Der Eingriff und Transport erfolgt ähnlich wie bei einem Cable Car oder einem Ski-Schlepplift, allerdings kann sich die Einhakvorrichtung an jeder Stelle einklinken. Dadurch kann der Abstand zwischen zwei FTFs 2 variieren oder konstant gehalten werden. Auch hier ist eine genaue Ausrichtung und Positionierung des FTF 2 vor Passieren des Übergangs wie oben beschrieben erforderlich, damit sich das FTF 2 nicht verlangsamen muss, um mit dem Umlaufband 24 verbunden zu werden.

In der oberen Förderebene 10 lösen sich die FTFs 2 automatisch vom Zugseil. Die FTFs 2 können längs oder quer, mit oder ohne Ausrichtungsvorrichtung 36 zur Kontrolle der Neigung des Lastaufnahmemittels 4, nach oben geschleppt werden.

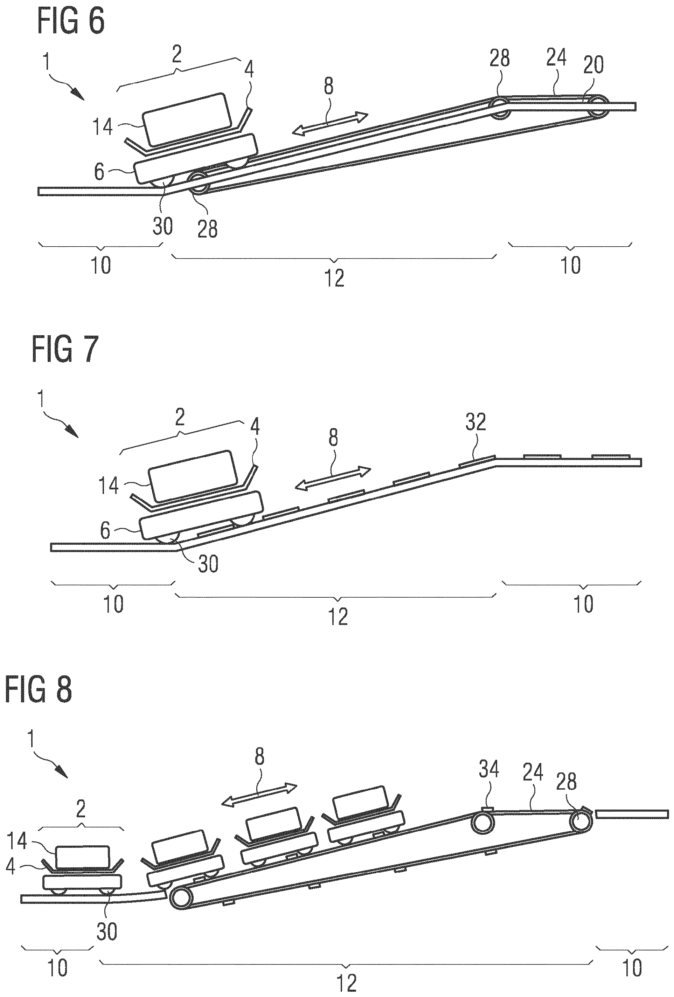

Figur 6 zeigt in Führungsschienen 20 als Führungselemente geführte, durch ein Zugmittel, hier als Umlaufband 24 ausgestaltet, transportierte FTF 2. Ein steigstreckenseitiges Zugmittel kann als Kette, Zahnriemen, Zugseil, Stahlband (das FTF wäre in diesem Fall mit einem Magneten ausgestattet) ausgestaltet sein, welches mit konstanter Durchsatzgeschwindigkeit läuft. Die FTF 2 fädeln sich in die Führungselemente ein, werden durch dies geführt und verbinden sich aktiv und/oder passiv mit dem Zugmittel. Das Zugmittel zieht das geführte FTF 2 mit konstanter Geschwindigkeit auf die obere Förderebene 10, wo sich das FTF 2 vom Zugmittel aktiv und/oder passiv abkoppelt, die Energieübertragungsvorrichtung E somit unterbricht und das Führungssystem verlässt.

Figur 7 zeigt in Führungsschienen 20 geführte, durch Linearmotoren angetriebene FTF 2. Das Fördersystem 1 umfasst Führungsschienen 20 (nicht vom Querschnitt getroffen) und als Primärseite E1 Linearmotoren als Zugmittel 32, hier mittig angeordnet. Die FTF 2 fädeln in die Führungsschiene 20 ein, werden durch diese geführt und durch die Linearmotoren an der Steigstrecke 12 angetrieben.

Figur 8 zeigt ein mit Steiggliedern 34 versehenes Steig- und Gliederband 24 welches als Primärseite E1 agiert. Der Übergang zwischen Förderebene 10 und Steigstrecke 12 beginnt mit einem sanften Anstieg, das FTF 2 wird erst nach Beginn der Steigstrecke 12 von der Primärseite E2 transportiert. Die FTF 2 fahren selbstständig auf das mit konstanter Durchsatzgeschwindigkeit laufende Umlaufband 24 (Steig- und Gliederband) auf, und werden von diesem nach oben transportiert. Das Zurückrollen wird durch eine Bremse der FTF 2, durch die als Mitnehmer agierende Steigglieder 34 auf dem Steigband und/oder durch sich an dem Umlaufband 24 arretierende Räder (beispielsweise in der Art eines Einkaufswagens) verhindert.

Die erfindungsgemäßen FTF 2 können sich selbstständig hin zu den Steigstrecken 10 bewegen und ohne Durchsatzeinbußen eine Steigstrecke 12 überwinden und so mehrere Förderebenen 10 erreichen. Dies ermöglicht, dass FTF-basierte Fördersysteme 1 dreidimensionale Sortier-, Kommissionier und Verteilaufgaben wahrnehmen. Es ist die funktionale Nachbildung bestehender Anlagen in Flughäfen und im CEP-Bereich möglich. Der erfinderische Schritt besteht darin, die FTF 2 antriebstechnisch und energetisch mit einer Sekundärseite E2 so auszurüsten, dass die FTF 2 ohne Durchsatzeinbußen selbstständig unterschiedliche Förderebenen 10 erreichen können.

Insbesondere für kleinere Steigungswinkel kann der Antrieb des FTF 2 und die ansteigende/abfallende Fahrspur der Steigstrecke 12 so ausgelegt sein, dass die FTF 2 aus eigener Kraft (ohne Unterstützung durch externe Antriebsmittel, allenfalls mit externer energetischer Unterstützung durch eine Primärseite E1) nach oben/unten fahren können.

Für größere Steigungswinkel wird eine kraft bzw. formschlüssige Verbindung zu einem mit Durchsatzgeschwindigkeit (Nenngeschwindigkeit) laufenden, externen Zugmittel 32 hergestellt. Das externe Zugmittel 32 (Seil, Kette, Zahnriemen, Linearmotoren, Zahnräder...) transportiert die FTF 2 auf einer ansteigenden/abfallenden Fahrbahn 8 frei oder schienengebunden auf eine andere Förderebene 10. Die FTF 2 stellen selbstständig eine kraft- und/oder formschlüssige Verbindung her, indem sie sich mit dem externen Zugmittel 32 synchronisieren und verbinden.

Nach Erreichen der zweiten Förderebene 10 lösen die FTF 2 die Verbindung mit dem externen Zugmittel selbstständig (aktiv oder automatisch).

Noch größere Steigungswinkel können durch eine, dem Steigungswinkel angepasste Neigung der Nutzlast 14 realisiert werden. Dabei wird die Aufnahme der Nutzlast auf dem Lastaufnahmemittel 4 (Kippschale, Crossbelt, Tray...) entsprechend dem Steigungswinkel geschwenkt, so dass sich die Nutzlast 14 und somit das Lastaufnahmemittel 4 im Steigungsbereich der Steigstrecke 12 in einer waagerechten Position befindet.

Das erfindungsgemäße fahrerlose Transportfahrzeug 2 ermöglicht zusammen mit der mit einer Primärseite versehenen Steigstrecke 12 eine Höhengängigkeit eines Fördersystems 2 bei konstanten durch Ausbildung einer lösbaren Energieübertragungsvorrichtung E.

## Patentansprüche

1. Fahrerloses Transportfahrzeug (2), auch FTF, Automated Guided Vehicle oder AGV genannt, umfassend:
- ein Lastaufnahmemittel (4) zur Aufnahme eines Stückguts (14);
- ein Fahrwerk (6) mit einem Antriebsmittel samt eigener Energieversorgung zum Bewegen auf einer Förderebene (10) entlang einer individuellen Förderstrecke (8) mit einer Durchsatzgeschwindigkeit;
wobei
- das Fahrwerk (6) eine Sekundärseite (E2) einer Energieübertragungsvorrichtung (E) aufweist, die zur Energieaufnahme mit und/oder ohne Berührungskontakt während einer Bewegung auf einer einen Höhenunterschied überwindenden Steigstrecke (12) und/oder auf einem Übergang auf die Steigstrecke (12) ausgebildet ist, so dass der Höhenunterschied durch diese Energieaufnahme und/oder der Übergang mit der Durchsatzgeschwindigkeit überwindbar ist;
- das fahrerlose Transportfahrzeug (2) zum Befahren der Steigstrecke (12) in variabler Ausrichtung ausgestaltet ist;
- das fahrerlose Transportfahrzeug zum Befahren der Steigstrecke (12) bei - variabler Längsausrichtung des Fahrwerks mit fester Längsausrichtung des Lastaufnahmemittels, oder
- variabler Querausrichtung des Fahrwerks mit variabler Längsausrichtung des Lastaufnahmemittels
ausgestaltet ist

2. Fahrerloses Transportfahrzeug (2) nach Anspruch 1 in der Ausgestaltung mit variabler Querausrichtung des Fahrwerks und variabler Längsausrichtung des Lastaufnahmemittels, zudem umfassend
mindestens eine Ausrichtungsvorrichtung, mittels welcher das Lastaufnahmemittel (4) um mindestens eine horizontale Achse schwenkbar gelagert ist, so dass das Lastaufnahmemittel (4) sowohl auf der Förderebene (10), als auch auf der Steigstrecke (12) aktiv und/oder passiv horizontal ausrichtbar ist.

3. Fahrerloses Transportfahrzeug (2) nach Anspruch 2, zudem umfassend
eine Entladevorrichtung, wobei die Ausrichtungsvorrichtung von der Entladevorrichtung umfasst ist.

4. Fahrerloses Transportfahrzeug (2) nach einem der Ansprüche 1 bis 3, **dadurch gekennzeichnet, dass**
das Lastaufnahmemittel (4) als Transportwanne oder Crossbelt oder Auflagefläche mit oder ohne teilweise oder vollständige seitliche Begrenzung ausgestaltet ist.

5. Fahrerloses Transportfahrzeug (2) nach einem der Ansprüche 1 bis 4, **dadurch gekennzeichnet, dass**
die Sekundärseite (E2) derart mit der Primärseite (E1) mechanisch verbindbar ausgestaltet ist, dass die Primärseite (E1) als Antriebsmittel zur Überwindung des Höhenunterschieds agiert.

6. Fahrerloses Transportfahrzeug (2) nach einem der Ansprüche 1 bis 5, **dadurch gekennzeichnet, dass**
das Antriebsmittel des Fahrwerks (6) ausgestaltet ist, derart von der Sekundärseite (E2) berührungslos mit Energie versorgt zu werden, dass der Höhenunterschied mit dem Antriebsmittel des Fahrwerks (6) überwindbar ist.

7. Fahrerloses Transportfahrzeug (2) nach einem der Ansprüche 1 bis 6, zudem umfassend
eine Orientierungsvorrichtung (16) zur Navigation, beispielsweise anhand optischer und/oder spur- und/oder liniengeführter Orientierung, des fahrerlosen Transportfahrzeugs (2).

8. Fördersystem zum Transportieren von Stückgütern auf einer Förderebene (10), umfassend
- ein fahrerloses Transportfahrzeug (2) nach einem der Ansprüche 1 bis 7 welches auf einer Förderebene (10) entlang einer individuellen Förderstrecke (8) mit einer Durchsatzgeschwindigkeit bewegbar ist;
- eine an die Förderebene (10) anschließende, einen Höhenunterschied überwindenden Steigstrecke (12);
- eine steigstreckenseitige Primärseite (E1) einer Energieübertragungsvorrichtung (E), die bei variabler Ausrichtung und während einer Bewegung des fahrerlosen Transportfahrzeugs (2) auf der Steigstrecke (12) und/oder auf einem Übergang auf die Steigstrecke (12) ausgebildet ist zur Energieeinspeisung mit und/oder ohne Berührungskontakt, so dass der Höhenunterschied und/oder der Übergang für das fahrerlose Transportfahrzeug (2) durch diese Energieeinspeisung mit der Durchsatzgeschwindigkeit überwindbar ist;
- die Primärseite (E1) ausgestaltet ist zur Energieeinspeisung bei variabler längs oder quer Ausrichtung des Fahrwerks (6) des förderlosen Transportfahrzeugs (2) der Steigstrecke (12).

9. Fördersystem nach Anspruch 8, **dadurch gekennzeichnet, dass** die Primärseite (E1) mechanisch mit der Sekundärseite (E2) verbindbar und so als Antriebsmittel zur Überwindung des Höhenunterschieds ausgestaltet ist.

10. Fördersystem nach einem der Ansprüche 8 bis 9, **dadurch gekennzeichnet, dass**
die Primärseite (E1) und die Sekundärseite (E2) zur Ausbildung und Trennung einer formschlüssigen Verbindung während einer Bewegung des fahrerlosen Transportfahrzeugs (2) mit Durchsatzgeschwindigkeit ausgestaltet sind.

11. Fördersystem nach einem der Ansprüche 8 bis 10, zudem umfassend
eine Orientierungsvorrichtung (16) zur Navigation der Bewegung des fahrerlosen Transportfahrzeugs (2) mittels einer ersten Art auf der Förderebene (10), beispielsweise einer optischen Führung, und/oder mittels einer zweiten Art auf der Steigstrecke (12), beispielsweise einer spur- und/oder liniengeführten Führung.

12. Verfahren zum Transportieren von Stückgütern mit einem fahrerlosen Transportfahrzeug (2), umfassend ein Fahrwerk (6) und ein Lastaufnahmemittel (4), umfassend die Verfahrensschritte:
a) Bewegen des fahrerlosen Transportfahrzeugs auf einer Förderebene (10) entlang einer individuellen Förderstrecke (8) mit einer Durchsatzgeschwindigkeit hin zu einer einen Höhenunterschied überwindenden Steigstrecke (12) wobei das fahrerlose Transportfahrzeug die Steigstrecke (12) bei variabler Längsausrichtung des Fahrwerks mit fester Längsausrichtung des Lastaufnahmemittels (4) befährt, oder bei variabler Querausrichtung des Fahrwerks mit variabler Längsausrichtung des Lastaufnahmemittels (4) befährt;
b) Ausbilden einer Energieübertragungsvorrichtung (E) aus einer steigstreckenseitigen Primärseite (E1) zur Energieeinspeisung und einer fahrwerkseitigen Sekundärseite (E2) zur Energieaufnahme mit und/oder ohne Berührungskontakt während einer Bewegung des fahrerlosen Transportfahrzeug (2) mit der Durchsatzgeschwindigkeit auf der Steigstrecke (12) und/oder einem Übergang zwischen der Förderebene (10) und der Steigstrecke (12);
c) Überwinden des Übergangs und des Höhenunterschieds auf der Steigstrecke (12) mit der Durchsatzgeschwindigkeit durch diese Energieaufnahme durch das fahrerlose Transportfahrzeug (2) mit der Durchsatzgeschwindigkeit;
d) Lösen der Energieübertragungsvorrichtung (E).

13. Verfahren nach Anspruch 12, **gekennzeichnet durch**
a) Führen des fahrerlosen Transportfahrzeugs (2) auf der Förderebene (10) mit einer ersten Art einer Orientierungsvorrichtung (16);
b) Wechsel einer Führungsart der Orientierungsvorrichtung (16) von einer ersten Art hin zu einer zweiten Art während einer Bewegung des fahrerlosen Transportfahrzeugs (2) mit der Durchsatzgeschwindigkeit;
c) Führen des fahrerlosen Transportfahrzeugs (2) auf der Steigstrecke (12) mit der zweiten Art der Orientierungsvorrichtung (16).

## Claims

1. Driverless transport vehicle (2), also called DTV, Automated Guided Vehicle or AGV comprising:
- a load handling device (4) for accepting an item of piece goods (14);
- a chassis (6) with a drive means together with a separate energy supply for moving on a conveying plane (10) along an individual conveying section (8) at a throughput speed;
wherein
- the chassis (6) has a secondary side (E2) of an energy transmission device (E) which is designed for energy pick-up with and/or without physical contact during a movement on a climbing section (12) negotiating a height difference and/or on a transition to the climbing section (12), such that the height difference can be negotiated by said energy pick-up and/or the transition can be negotiated at the throughput speed;
- the driverless transport vehicle (2) is configured to travel along the climbing section (12) in a variable orientation;
- the driverless transport vehicle is configured to travel along the climbing section (12) with
- a variable longitudinal orientation of the chassis with a fixed longitudinal orientation of the load handling device or
- a variable transverse orientation of the chassis with a variable longitudinal orientation of the load handling device.

2. Driverless transport vehicle (2) according to claim 1 in the embodiment with a variable transverse orientation of the chassis and a variable longitudinal orientation of the load handling device, furthermore comprising
at least one orientation device, by means of which the load handling device (4) is pivotably mounted about at least one horizontal axis, such that the load handling device (4) can be actively and/or passively horizontally oriented both on the conveying plane (10) and on the climbing section (12).

3. Driverless transport vehicle (2) according to claim 2, furthermore comprising
an unloading device, wherein the orientation device is comprised by the unloading device.

4. Driverless transport vehicle (2) according to one of claims 1 to 3, **characterised in that**
the load handling device (4) is configured as a transport tray or crossbelt or support surface with or without a partial or complete lateral boundary.

5. Driverless transport vehicle (2) according to one of claims 1 to 4, **characterised in that**
the secondary side (E2) is configured to be mechanically connectable to the primary side (E1), such that the primary side (E1) acts as a drive means to negotiate the height difference.

6. Driverless transport vehicle (2) according to one of claims 1 to 5, **characterised in that**
the drive means of the chassis (6) is configured to be supplied with energy by the secondary side (E2) without physical contact, such that the height difference can be negotiated with the drive means (6) of the chassis.

7. Driverless transport vehicle (2) according to one of claims 1 to 6, furthermore comprising
an orientation device (16) for navigation, for example using an optical and/or track-guided and/or line-guided orientation of the driverless transport vehicle (2).

8. Conveying system for transporting piece goods on a conveying plane (10), comprising
- a driverless transport vehicle (2) according to one of claims 1 to 7, which can move on a conveying plane (10) along an individual conveying section (8) at a throughput speed;
- a climbing section (12) abutting the conveying plane (10) and negotiating a height difference;
- a climbing-section-side primary side (E1) of an energy transmission device (E), which is designed with a variable orientation and during a movement of the driverless transport vehicle (2) on the climbing section (12) and/or on a transition to the climbing section (12) is embodied for energy input with and/or without physical contact, such that the height difference and/or the transition for the driverless transport vehicle (2) can be negotiated by this energy input at the throughput speed;
- the primary side (E1) is configured for energy input with a variable longitudinal or transverse orientation of the chassis (6) of the driverless transport vehicle (2) to the climbing section (12).

9. Conveying system according to claim 8, **characterised in that**
the primary side (E1) can be mechanically connected to the secondary side (E2) and thus is configured as a drive means to negotiate the height difference.

10. Conveying system according to one of claims 8 to 9,
**characterised in that** the primary side (E1) and the secondary side (E2) are configured for the formation and disconnection of a positive connection during a movement of the driverless transport vehicle (2) at a throughput speed.

11. Conveying system according to one of claims 8 to 10, furthermore comprising
an orientation device (16) for navigation of the movement of the driverless transport vehicle (2) by means of a first type on the conveying plane (10), for example an optical guide, and/or by means of a second type on the climbing section (12), for example a track-guided and/or line-guided guide.

12. Method for transporting piece goods with a driverless transport vehicle (2), comprising a chassis (6) and a load handling device (4), comprising the method steps:
a) Movement of the driverless transport vehicle on a conveying plane (10) along an individual conveying section (8) at a throughput speed to a climbing section (12) negotiating a height difference, wherein the driverless transport vehicle travels the climbing section (12) with a variable longitudinal orientation of the chassis with a fixed longitudinal orientation of the load handling device (4), or with a variable transverse orientation of the chassis with a variable longitudinal orientation of the load handling device (4)
b) Formation of an energy transmission device (E) from a climbing-section-side primary side (E1) for energy input and a chassis-side secondary side (E2) for energy pick-up with and/or without physical contact during a movement of the driverless transport vehicle (2) at the throughput speed on the climbing section (12) and/or a transition between the conveying plane (10) and the climbing section (12);
c) Negotiation of the transition and of the height difference on the climbing section (12) at the throughput speed thanks to said energy pick-up by the driverless transport vehicle (2) at the throughput speed;
d) Detachment of the energy transmission device (E).

13. Method according to claim 12, **characterised by**
a) Guidance of the driverless transport vehicle (2) on the conveying plane (10)_with a first type of orientation device (16);
b) Changing a guidance type of the orientation device (16) from a first type to a second type during a movement of the driverless transport vehicle (2) at the throughput speed;
c) Guidance of the driverless transport vehicle (2) on the climbing section (12) with the second type of orientation device (16).

## Revendications

1. Véhicule de transport sans conducteur (2), également appelé FTF, véhicule à guidage automatique ou VGA, comprenant :
- un moyen d'accueil de charge (4) permettant d'accueillir une marchandise (14) ;
- un châssis (6) avec un moyen d'entraînement et sa propre alimentation en énergie lui permettant de se déplacer sur un plan de transport (10) le long d'un trajet de transport individuel (8) à une vitesse d'efficacité ;
dans lequel
- le châssis (6) présente un côté secondaire (E2) d'un dispositif de transmission d'énergie (E) qui est conçu pour recevoir de l'énergie avec et/ou sans contact pendant un déplacement sur un trajet ascendant (12) franchissant une différence de hauteur et/ou sur une transition présente sur le trajet ascendant (12), de sorte que la différence de hauteur peut être franchie grâce à ladite réception d'énergie et/ou la transition peut être franchie à la vitesse d'efficacité ;
- le véhicule de transport sans conducteur (2) est conçu pour parcourir le trajet ascendant (12) avec un alignement variable ;
- le véhicule de transport sans conducteur est conçu pour parcourir le trajet ascendant (12) avec
- un alignement longitudinal fixe du moyen d'accueil de charge lorsque l'alignement longitudinal du châssis est variable, ou
- un alignement longitudinal variable du moyen d'accueil de charge lorsque l'alignement transversal du châssis est variable.

2. Véhicule de transport sans conducteur (2) selon la revendication 1, dans la conception incluant un alignement transversal variable du châssis et un alignement longitudinal variable du moyen d'accueil de charge, comprenant en outre au moins un dispositif d'alignement au moyen duquel le moyen d'accueil de charge (4) est monté pivotant autour d'au moins un axe horizontal, de sorte que le moyen d'accueil de charge (4) peut être aligné horizontalement de manière active et/ou passive à la fois sur le plan de transport (10) et sur le trajet ascendant (12).

3. Véhicule de transport sans conducteur (2) selon la revendication 2, comprenant en outre
un dispositif de déchargement, dans lequel le dispositif d'alignement est inclus dans le dispositif de déchargement.

4. Véhicule de transport sans conducteur (2) selon l'une quelconque des revendications 1 à 3, **caractérisé en ce que**
le moyen d'accueil de charge (4) est conçu comme une cuve de transport ou une Crossbelt ou une surface d'appui avec ou sans limitation latérale partielle ou totale.

5. Véhicule de transport sans conducteur (2) selon l'une quelconque des revendications 1 à 4, **caractérisé en ce que**
le côté secondaire (E2) est conçu pour être relié mécaniquement au côté primaire (E1) de telle manière que le côté primaire (E1) agit comme un moyen d'entraînement permettant de franchir la différence de hauteur.

6. Véhicule de transport sans conducteur (2) selon l'une quelconque des revendications 1 à 5, **caractérisé en ce que**
le moyen d'entraînement du châssis (6) est conçu pour être alimenté en énergie sans contact par le côté secondaire (E2) de telle manière que la différence de hauteur peut être franchie grâce au moyen d'entraînement du châssis (6).

7. Véhicule de transport sans conducteur (2) selon l'une quelconque des revendications 1 à 6, comprenant en outre
un dispositif d'orientation (16) permettant une navigation, par exemple à l'aide d'une orientation optique et/ou guidée par piste et/ou ligne, du véhicule de transport sans conducteur (2).

8. Système de transport permettant de transporter des marchandises sur un plan de transport (10), comprenant
- un véhicule de transport sans conducteur (2) selon l'une quelconque des revendications 1 à 7, qui peut être déplacé sur un plan de transport (10) le long d'un trajet de transport individuel (8) à une vitesse d'efficacité ;
- un trajet ascendant (12) faisant suite au plan de transport (10) et franchissant une différence de hauteur ;
- un côté primaire (E1) situé côté trajet ascendant d'un dispositif de transmission d'énergie (E), qui est conçu pour, en cas d'alignement variable et pendant un déplacement du véhicule de transport sans conducteur (2) sur le trajet ascendant (12) et/ou sur une transition présente sur le trajet ascendant (12), assurer une alimentation en énergie avec et/ou sans contact, de sorte que la différence de hauteur et/ou la transition peut (ven)t être franchie(s) par le véhicule de transport sans conducteur (2) à la vitesse d'efficacité grâce à ladite alimentation en énergie ;
- le côté primaire (E1) est conçu pour assurer une alimentation en énergie en cas d'alignement longitudinal ou transversal variable du châssis (6) du véhicule de transport sans conducteur (2) sur le trajet ascendant (12).

9. Système de transport selon la revendication 8, **caractérisé en ce que** le côté primaire (E1) peut être relié mécaniquement au côté secondaire (E2) et est ainsi conçu comme moyen d'entraînement permettant de franchir la différence de hauteur.

10. Système de transport selon l'une quelconque des revendications 8 à 9, **caractérisé en ce que**
le côté primaire (E1) et le côté secondaire (E2) sont conçus pour former et séparer une liaison avec verrouillage par complémentarité de forme pendant un déplacement du véhicule de transport sans conducteur (2) à la vitesse d'efficacité.

11. Système de transport selon l'une quelconque des revendications 8 à 10, comprenant en outre
un dispositif d'orientation (16) permettant une navigation servant au déplacement du véhicule de transport sans conducteur (2) au moyen d'un premier type de guidage sur le plan de transport (10), par exemple un guidage optique, et/ou au moyen d'un second type de guidage sur le trajet ascendant (12), par exemple un guidage par piste et/ou ligne.

12. Procédé de transport de marchandises avec un véhicule de transport sans conducteur (2), comprenant un châssis (6) et un moyen d'accueil de charge (4), comprenant les étapes de procédé ci-dessous :
a) déplacer le véhicule de transport sans conducteur sur un trajet de transport (10) le long d'un trajet de transport individuel (8) à une vitesse d'efficacité vers un trajet ascendant (12) franchissant une différence de hauteur, dans lequel le véhicule de transport sans conducteur parcourt le trajet ascendant (12) avec un alignement longitudinal fixe du moyen d'accueil de charge (4) lorsque l'alignement longitudinal du châssis est variable ; ou avec un alignement longitudinal variable du moyen d'accueil de charge (4) lorsque l'alignement transversal du châssis est variable ;
b) former un dispositif de transmission d'énergie (E) à partir d'un côté primaire (E1) situé côté trajet ascendant et permettant d'assurer une alimentation en énergie et à partir d'un côté secondaire (E2) situé côté châssis et permettant de recevoir de l'énergie avec et/ou sans contact pendant un déplacement du véhicule de transport sans conducteur (2) à la vitesse d'efficacité sur le trajet ascendant (12) et/ou sur une transition entre le plan de transport (10) et le trajet ascendant (12) ;
c) franchir la transition et la différence de hauteur sur le trajet ascendant (12) à la vitesse d'efficacité grâce à ladite réception d'énergie par le véhicule de transport sans conducteur (2) à la vitesse d'efficacité ;
d) désactiver le dispositif de transfert d'énergie (E).

13. Procédé selon la revendication 12, **caractérisé par** les étapes de
a) guider le véhicule de transport sans conducteur (2) sur le plan de transport (10) avec un premier type de dispositif d'orientation (16) ;
b) faire passer le type de guidage du dispositif d'orientation (16) d'un premier type à un second type pendant un déplacement du véhicule de transport sans conducteur (2) à la vitesse d'efficacité ;
c) guider le véhicule de transport sans conducteur (2) sur le trajet ascendant (12) grâce au second type de dispositif d'orientation (16).
